# EUROPÄISCHE PATENTSCHRIFT

(11) **EP 0 570 700 B1**
(45) Veröffentlichungstag und Bekanntmachung des Hinweises auf die Patenterteilung: **05.03.1997**
(21) Anmeldenummer: 93106019.8
(22) Anmeldetag: 14.04.1993
(51) Int. Cl.: F04C 2/08, B23K 11/26

(54) **Verfahren zur Herstellung eines Zahnrades einer Innenzahnradpumpe**
Process for production of a gear for an internal gear pump
Procédé de fabrication d'une roue dentée d'une pompe à engrenage interne

(30) Priorität: 21.05.1992 DE 4216823
(43) Veröffentlichungstag der Anmeldung: 24.11.1993
(73) Patentinhaber: Schwäbische Hüttenwerke GmbH, D-73414 Aalen (DE)
(72) Erfinder: Krehl, Michael, Dr., W-7329 Lauterstein-Nenningen (DE); Schwarze, Rolf, W-7080 Aalen-Wasseralfingen (DE); Subek, Gerhard, W-7080 Aalen-Wasseralfingen (DE)
(74) Vertreter: Lorenz, Werner, Dipl.-Ing.

(56) Entgegenhaltungen:
- EP-A- 0 422 617
- US-A- 4 233 003

## Beschreibung

Die Erfindung betrifft ein Verfahren zur Herstellung eines Zahnrades einer Innenzahnradpumpe, das aus zwei Halbrädern besteht, die jeweils mit als Halbkavitäten ausgebildeten überlaufkanälen ausgestattet sind, in die Kugeln eingelegt werden können. Dabei werden die Halbräder so zusammengefügt, daß sich die vollständigen Überlaufkanäle aus den Halbkavitäten bilden, und daß die Zähne des Zahnrades fluchtend aufeinanderliegen.

Ein Verfahren dieser Art ist in der DE-PS 39 33 978 beschrieben. Dabei handelt es sich um eine sauggeregelte Zahnringpumpe, insbesondere eine Hydraulikpumpe für Kraftfahrzeugmotoren. Zur Ausbildung geeigneter Pumpenkennlinien besitzt jeweils eines der Zahnräder in seinem Inneren überlaufkanäle, die teilweise mit Kugeln ausgefüllt sind, welche an entsprechenden Ventilsitzen anliegen können. Die Herstellung in einzelnen Verfahrensschritten ist umständlich. Die dort betriebene Verbindung durch Explosionsschweißen ist ungeeignet, da sich die Teile dabei verziehen.

Offensichtlich aus diesem Grund wurde in der genannten Vorveröffentlichung noch eine weitere Verfahrensvariante zur Herstellung angegeben, die darin bestehen soll, daß die beiden Halbräder überhaupt nicht miteinander verbunden werden, da sie in ihrer Drehlage durch die Zähne des korrespondierenden Zahnrades fixiert sind und sich auch nicht axial voneinander entfernen können, da dies die Stirnwände der Zahnradkammern verhindern sollen. Da aber das Zahnrad in seiner Kammer rotierend angeordnet sein muß, müssen an den Stirnwänden Spielräume gelassen werden, die notwendigerweise auch zwischen den beiden Halbrädern entstehen müssen. Die dadurch bedingten Leckverluste sind für das Funktionieren der Innenzahnradpumpe schädlich. Die weiter angegebenen Herstellungsverfahren bewirken ein Verziehen bzw. sind in der Herstellung aufwendig.

Der vorliegenden Erfindung liegt nun die Aufgabe zugrunde, ein Verfahren zur Herstellung des erwähnten Zahnrades zu schaffen, bei welchem die genannten Nachteile nicht auftreten. Eine weitere Aufgabe der Erfindung ist es, ein Verfahren anzugeben, das in wenigen Verfahrensschritten die Herstellung eines Zahnrades erlaubt, das mit möglichst geringen Verzugserscheinungen möglichst genaue äußere und innere Konturen aufweist.

Erfindungsgemäß wird diese Aufgabe durch folgende Verfahrensschritte gelöst:
a) Das Einlegen der Ventilkugeln in die Halbkavitäten eines Halbrades erfolgt vor einem Schweißvorgang und
b) die Halbräder werden einem Kondensator-Entladungsschweißverfahren unterzogen.

Nach diesem Verfahren können sowohl Innenlaufräder wie Hohlräder hergestellt werden. Es hat sich gezeigt, daß zur Herstellung dieser Zahnräder das Kondensator-Entladungsschweißverfahren besonders geeignet ist, denn es entstehen trotz der großen Querschnitts- und Dickendifferenzen der Halbräder nur geringe Verzugsfehler; das Verfahren ist auch bei Serienfertigung genau reproduzierbar. Dabei kann durch wenige Versuche die Schweißenergie und der Schweißdruck für das zu verarbeitende Schweißvolumen ermittelt werden. Die einmal eingestellten Werte sind ohne Nachregulierung für alle Räder gleicher Abmessung brauchbar. Durch die geringe Anzahl der Arbeitsvorgänge ist eine wirtschaftliche Herstellung möglich.

In einer sehr vorteilhaften Weiterbildung der Erfindung kann vorgesehen sein, daß gleichzeitig mit der Ausformung der Zähne und der als Halbkavitäten ausgebildeten Überlaufkanäle an den als Fügeflächen dienenden Stirnseite der Halbräder Schweißnoppen ausgebildet werden, die einstückig mit den Halbrädern verbunden sind und die über die Fügeflächen hinausragen.

Durch die Schweißnoppen werden bei dem erfindungsgemäßen Schweißverfahren sehr hohe Übergangswiderstände geschaffen, die sich sehr positiv auf den Schweißvorgang auswirken.

Es läßt sich allerdings auch nach diesem Verfahren nicht immer vollständig vermeiden, daß zwischen den beiden Halbrädern Teilungsdifferenzen während der Herstellung entstehen, welche die Funktionsfähigkeit der Pumpe beeinträchtigen können. Um dies zu vermeiden, werden nach einer bevorzugten Ausführungsform der Erfindung die beiden Halbräder in einem ersten Verfahrensschritt als ein einziges Radstück hergestellt; die beiden Stirnseiten desselben sind dabei als die vorgesehenen Fügeflächen ausgebildet; das Radstück wird nach dessen Herstellung senkrecht zu seiner Drehachse durch einen Planschnitt in zwei Halbräder geteilt; daraufhin werden die Halbräder vor dem Schweißvorgang um 180° um eine senkrecht zur Drehachse liegende Achse gewendet.

Das hat den Vorteil, daß beide Zahnradhälften in einem einzigen Radstück hergestellt werden, so daß sich ein eventueller Teilungsfehler nicht dadurch äußern kann, daß das fertigverschweißte Rad in seinen beiden Radhälften Zähne aufweist, die etwas gegeneinander versetzt sein können.

Sowohl nach der ersten wie auch nach der zweiten Verfahrensvariante können nach einer bevorzugten Ausführungsform der Erfindung zugleich mit der Anformung der Zähne an den Stellen der einen Fügefläche, die den Schweißnoppen der anderen Fügefläche gegenüberliegen, Schweißvertiefungen angebracht werden. Die Schweißvertiefungen können dabei ein derartiges Volumen aufweisen, daß sie das Material, das beim Schweißvorgang von den Schweißnoppen "abfließt" aufnehmen, so daß eine bündige und flächige Verbindung beim Verschweißen zwischen den beiden Halbrädern entsteht.

Zweckmäßigerweise erfolgt das fluchtende Positionieren der beiden Halbräder während des Zuführens zur Schweißmaschine bzw. beim Verschweißen.

In der oben angegebenen zweiten Variante werden die beiden Halbräder zunächst als einziges Radstück hergestellt, das nachträglich geteilt wird. Um das Auffinden der zueinander passenden Zahnräder der beiden Radhälften zu erleichtern, wird bei der Herstellung des einzigen Radstückes an dessen Umfang eine Markierung angebracht, die entlang einer Mantellinie verläuft. Dies kann eine V-Nut sein, die nach dem Zusammenschweißen der beiden Halbräder zugleich mit der ohnehin notwendigen Bearbeitung der zylindrischen Mantelflächen des Zahnrades mitentfernt wird.

Nach einer weiteren Ausgestaltung der Erfindung erfolgt das Einlegen der Ventilkugeln durch eine Anzahl von Saugarmen, die mit der Anzahl der Ventilkugeln identisch ist; dabei werden die Saugarme so zueinander positioniert, daß die Kugeln nach dem Entfernen des Vakuums in die darunterliegenden Halbkavitäten fallen.

Das fluchtende Positionieren der beiden Halbräder erfolgt in vorteilhafter Weise durch elektrisch nichtleitende Positionierglieder, wodurch eine beim Kondensator-Entladungsschweißverfahren unerwünschte elektrische Leitung vermieden wird.

Zum Prüfen des geschweißten Zahnrades wird nach einer bevorzugten Ausführungsform der Erfindung dieses einem Vibrationsvorgang unterzogen; das dabei entstehende Frequenzspektrum wird z.B. elektronisch aufgezeichnet und mit einem Frequenzspektrum verglichen, das dem eines in Bezug auf Anzahl und Beweglichkeit der Ventilkugeln fehlerfreien Zahnrades entspricht.

Bei einer unzulässigen Abweichung der beiden Frequenzspektren kann eine Steuerung ausgelöst werden, die das einem Vibrationsvorgang unterworfene Zahnrad als Ausschußteil aussondert. Ein weiterer vorteilhafter Prüfvorgang besteht darin, daß die Einlaß- oder Auslaßöffnungen des geschweißten Zahnrades durch ein Fluid, nämlich eine Flüssigkeit oder ein Gas, angeströmt wird, daß danach die entstehende Druckdifferenz zwischen Einlaß- und Auslaßöffnungen gemessen und aufgezeichnet wird; diese Druckdifferenz wird mit der Druckdifferenz verglichen, die einem in Bezug auf Anzahl und Beweglichkeit der Ventilkugeln fehlerfreien Zahnrad entspricht.

Dabei kann ebenfalls bei unzulässiger Abweichung der beiden Druckdifferenzen eine Steuerung ausgelöst werden, die das der Druckdifferenzmessung unterworfene Zahnrad als Ausschußteil aussondert.

In dem folgenden Ausführungsbeispiel, das die zweite oben beschriebene Variante beinhaltet, wird die Erfindung näher erläutert.

Es zeigt:
- Fig. 1: das beschriebene einzige Radstück;
- Fig. 2: das geteilte Rad, wodurch die zwei Radhälften entstehen; und
- Fig. 3: das fertige Zahnrad, wie es beispielsweise in den Fig. 1 und 2 der DE-PS 39 33 978 gezeigt ist.

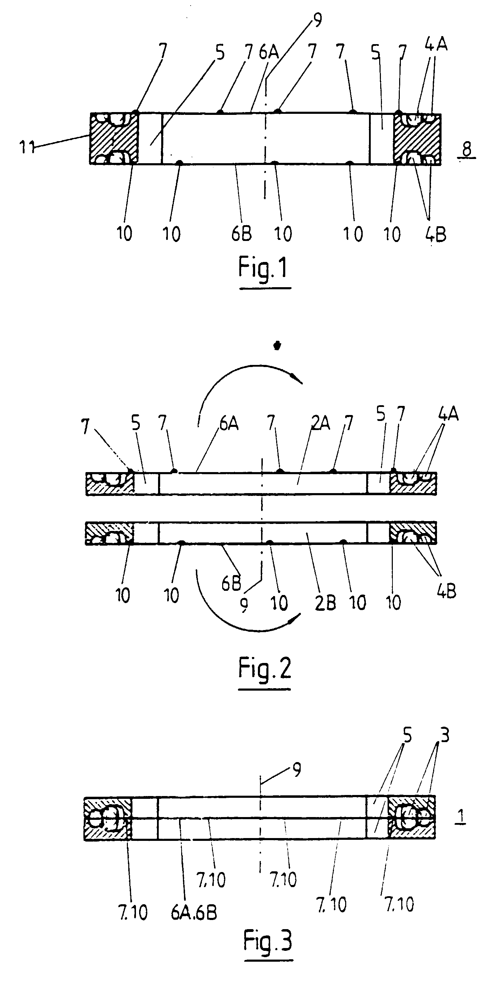

Das einzige Radstück 8 der Fig. 1, das in einem Preß- und Sintervorgang aus Metallpulver in bekannter Weise hergestellt ist, weist Zähne 5 und Halbkavitäten 4A und 4B auf, die im fertigen Zahnrad 1 Überlaufkanäle 3 bilden.

Fügeflächen 6A und 6B zeigen bei dem einzigen Radstück 8 der Fig. 1 nach außen, stellen also in diesem Verfahrensschritt die Stirnflächen dar. Die Fügefläche 6A weist eine Vielzahl von gleichmäßig über die Stirnfläche verteilten Schweißnoppen 7 auf, wobei an der gegenüberliegenden Fügefläche 6B Schweißvertiefungen 10 so angebracht sind, daß sie genau den Schweißnoppen 7 gegenüberliegen.

Das so hergestellte einzige Radstück 8 wird nun in einer Ebene geteilt, die senkrecht zur Drehachse 9 liegt. Es entstehen dadurch die beiden Halbräder 2A und 2B der Fig. 2.

Diese werden nun entsprechend der Pfeilrichtung der Fig. 2 gewendet, so daß sie, wie in Fig. 3 gezeigt, übereinander liegen.

Um einen bei der Herstellung des einzigen Rades 8 nach Fig. 1 möglichen Teilungsfehler der Zähne 5 beim Zusammenfügen der beiden Halbräder 2A und 2B nach Fig. 3 zu eliminieren, wird bei der Herstellung des einzigen Radstückes 8 an dessen Umfang 11 eine V-förmige Nut angebracht, die exakt parallel zu einer Mantellinie des Umfanges, also parallel zur Drehachse 9 verläuft. Diese Nut bleibt auch bei der Trennung in zwei Halbräder nach Fig. 2 erhalten und dient beim Aufeinandersetzen der beiden Halbräder nach Fig. 3 der richtigen Positionierung der einzelnen Zähne 5 der beiden Halbräder 2A und 2B.

Nach dem Positionieren der beiden Halbräder 2A und 2B, was z.B. durch zwei oder mehr Bolzen oder Rollen aus nichtleitendem Material, z.B. aus Keramik, erfolgen kann, die entsprechend am Umfang verteilt zwischen den Zähnen positioniert werden, erfolgt eine Verschweißung in einer Kondensator-Entladungsschweißmaschine. Der Schweißvorgang in einer Kondensator-Entladungsschweißmaschine ist ansich bekannt, weshalb hier nur kurz darauf eingegangen wird.

Bekanntlich ist das Kondensator-Entladungsschweißen eine spezielle Art eines Widerstandsschweißverfahrens, bei dem die erforderliche Energie während des Schweißens nicht direkt dem Stromnetz über einen Transformator entnommen wird, sondern einer Kondensatorbatterie, die als Energiespeicher in der Nebenzeit geladen wird.

Die Elektroden werden gegen die zu verbindenden Werkstücke gefahren - im vorliegenden Falle die Halbräder - und bei Erreichen des erforderlichen Schweißdruckes wird der Schweißimpuls ausgelöst. Da dieser Schweißimpuls extrem kurz ist, wird die Energie auf die eigentliche Schweißzone konzentriert. Die Werkstücke kommen damit praktisch kalt nach der Verschweißung aus der Maschine und bleiben formbeständig. Insbesondere zeigen sie keinen Verzug oder Formänderungen.

Energie und Druck sind dabei die Einstellparameter für die Verschweißung, welche entsprechend dem Schweißteil eingestellt wird. Dabei wird die Kondensatorbatterie auf die eingestellte Energie mit konstantem Strom geladen. Eine pneumatisch oder hydraulisch betriebene Schweißpresse fährt die Elektroden auf die Schweißnoppen des Schweißling, im vorliegenden Falle auf das Zahnrad, und baut den eingestellten Schweißdruck auf. Die Kondensatoren werden damit entladen und über das Zahnrad fließt der Schweißstrom.

Statt der Herstellung des Zahnrades - wie vorstehend beschrieben - aus einem einzigen Körper, der anschließend in die beiden Halbräder 2A und 2B geteilt wird, ist eine Herstellung des Zahnrades auch aus zwei spiegelbildlichen Halbradhälften möglich, in denen jeweils Halbkavitäten auf einer Stirnseite eingeformt sind. Die beiden spiegelbildlichen Halbräder können dabei - ebenso wie bei dem 1. Beispiel - in einem normalen pulvermetallurgischen Herstellungsverfahren, das heißt Pressen, Sintern und Kalibrieren, hergestellt werden. Anschließend werden die beiden Halbräder in gleicher Weise wie vorstehend beschrieben in einer Kondensator-Entladungsschweißmaschine zu einem einstückigen Zahnrad miteinander verbunden.

In beiden Ausführungsbeispielen werden vorher die Kugeln in die Halbkavitäten eines der beiden Halbräder eingelegt.

Die Anordnung von Kugeln in den überlaufkanälen ist selbstverständlich nicht unbedingt zur Lösung der gestellten Aufgabe notwendig. In Einzelfällen können auch die Überlaufkanäle frei von irgendwelchen Ventilteilen gehalten sein.

## Patentansprüche

1. Verfahren zur Herstellung eines Zahnrades einer Innenzahnradpumpe, das aus zwei Halbrädern (2A,2B) besteht, die jeweils mit als Halbkavitäten (4A,4B) ausgebildeten Überlaufkanälen (3) ausgestattet sind, in die Kugeln eingelegt werden können, wobei die Halbräder (3A,3B) so zusammengefügt werden, daß sich die vollständigen Überlaufkanäle (3) aus den Halbkavitäten (4A,4B) bilden und die Zähne (5) des Zahnrades (1) fluchtend übereinanderliegen, wobei die etwaigen Ventilkugeln in die Halbkavitäten (4A oder 4B) eines Halbrades (2A oder 2B) vor einem Schweißvorgang eingelegt werden,
**dadurch gekennzeichnet**, daß die Halbräder (2A,2B) einem Kondensator-Entladungsschweißverfahren unterzogen werden, und daß gleichzeitig mit der Ausformung der Zähne (5) und der als Halbkavitäten (4A,4B) ausgebildeten Überlaufkanäle (3) an den als Fügeflächen (5A,6B) dienenden Stirnseite der Halbräder (2A,2B) Schweißnoppen (7) ausgebildet werden, die mit den Halbrädern (2A,2B) einstückig sind und die über die Fügeflächen (6A,6B) hinausragen.

2. Verfahren nach Anspruch 1,
**dadurch gekennzeichnet**, daß die beiden Halbräder (2A,2B) durch einen Sintervorgang aus Sintermetallpulver hergestellt werden.

3. Verfahren nach Anspruch 1, oder 2,
**dadurch gekennzeichnet**, daß die beiden Halbräder (2A,2B) in einem ersten Verfahrensschritt als ein einziges Radstück (8) hergestellt werden (Fig. 1), daß die beiden Stirnseiten desselben als die vorgesehenen Fügeflächen (6A,6B) ausgebildet sind, daß das Radstück (8) nach dessen Herstellung durch einen Planschnitt senkrecht zu seiner Drehachse (9) in zwei Halbräder (2A,2B) geteilt wird (Fig. 2) und daß die Halbräder (2A,2B) vor dem Schweißvorgang um 180° um eine senkrecht zur Drehachse (9) liegende Achse gewendet werden.

4. Verfahren nach einem der Ansprüche 1 bis 3,
**dadurch gekennzeichnet,** daß das Zahnrad aus zwei separat hergestellten Halbrädern (2A,2B) gebildet wird.

5. Verfahren nach einem der Ansprüche 1 bis 4,
**dadurch gekennzeichnet,** daß zugleich mit der Ausformung der Zähne (5) an den Stellen der einen Fügefläche (6B), die den Schweißnoppen (7) der anderen Fügefläche (6A) gegenüberliegenden Schweißvertiefungen angebracht werden.

6. Verfahren nach einem der Ansprüche 1 bis 5,
**dadurch gekennzeichnet,** daß das fluchtende Positionieren der beiden Halbräder vor oder während des Zuführens zu einer Schweißmaschine erfolgt.

7. Verfahren nach einem der Ansprüche 1 bis 6,
**dadurch gekennzeichnet,** daß das fluchtende Positionieren der beiden Halbräder (2A,2B) durch elektrische nichtleitende Positionierglieder erfolgt.

8. Verfahren nach einem der Ansprüche 1 bis 7,
**dadurch gekennzeichnet**, daß bei der Herstellung des einzigen Radstückes (8) an dessen Umfang (11) eine Markierung angebracht wird, die entlang einer Mantellinie verläuft.

9. Verfahren nach einem der Ansprüche 1 bis 8,
**dadurch gekennzeichnet**, daß das Einlegen der Ventilkugeln durch eine Anzahl von Saugarmen erfolgt, die mit der Anzahl der Ventilkugeln identisch ist, wobei die Saugarme so zueinander positioniert werden, daß die Kugeln nach dem Entfernen des Vakuums in die darunterliegenden Halbkavitäten (4A,4B) fallen.

10. Verfahren nach einem der Ansprüche 1 bis 9,
**dadurch gekennzeichnet**, daß das geschweißte Zahnrad (1) einem Vibrationsvorgang unterzogen, das dabei entstehende Frequenzspektrum elektronisch aufgezeichnet und mit einem Frequenzspektrum verglichen wird, das dem eines in Bezug auf Anzahl und Beweglichkeit der Ventilkugeln fehlerfreien Zahnrades entspricht, wobei bei unzulässiger Abweichung der beiden Freguenzspektren eine Steuerung ausgelöst wird, die das einem Vibrationsvorgang unterworfene Zahnrad als Ausschußteil aussondert.

11. Verfahren nach Anspruch 10,
**dadurch gekennzeichnet,** daß die Einlaß- oder Auslaßöffnungen des geschweißten Zahnrades (1) durch ein Fluid angeströmt, die entstehende Druckdifferenz zwischen Einlaß- und Auslaßöffnungen gemessen und aufgezeichnet und mit der Druckdifferenz verglichen wird, die einem in Bezug auf Anzahl und Beweglichkeit der Ventilkugeln fehlerfreien Zahnrad entspricht.

12. Verfahren nach Anspruch 11,
**dadurch gekennzeichnet,** daß bei unzulässiger Abweichung der beiden Druckdifferenzen eine Strömung ausgelöst wird, die das der Druckdifferenzmessung unterworfene Zahnrad als Ausschußteil aussondert.

## Claims

1. Process for the production of a gear for an internal gear pump, consisting of two half gears (2A, 2B) provided with respective overflow channels (3) in the form of half cavities (4A, 4B) into which spheres can be inserted, the half gears (2A, 2B) being assembled together in such a manner that the complete overflow channels (3) consisting of the half cavities (4A, 4B) are formed and the teeth (5) of the gear (1) overlap one another in alignment, any valve spheres being inserted into the half cavities (4A or 4B) of a half gear (2A or 2B) prior to a welding operation, characterised in that the half gears (2A, 2B) are subjected to capacitor discharge welding and that, simultaneously with the formation of the teeth (5) and the overflow channels (3) in the form of half cavities (4A, 4B), weld beads (7) are formed on the end faces of the half gears (2A, 2B) serving as joining surfaces (6A, 6B), said weld beads being made in one piece with the half gears (2A, 2B) and projecting beyond the joining surfaces (6A, 6B).

2. Process according to claim 1, characterised in that the two half gears (2A, 2B) are produced from sintered powder metal by a sintering process.

3. Process according to claim 1 or claim 2, characterised in that the two half gears (2A, 2B) are produced as one single gear piece (8) in a first process step (Fig. 1), that the two end faces thereof are designed to form the joining surfaces (6A, 6B) provided, that, following the production of the gear piece (8), the latter is divided into two half gears (2A, 2B) by a facing cut perpendicular to its axis of rotation (9) (Fig. 2) and that the half gears (2A, 2B) are rotated through 180° about an axis extending perpendicularly to the axis of rotation (9) prior to the welding operation.

4. Process according to one of claims 1 to 3, characterised in that the gear is formed of two half gears (2A, 2B) produced separately.

5. Process according to one of claims 1 to 4, characterised in that, simultaneously with the formation of the teeth (5) at the points on one joining surface (6B), the weld recesses are formed opposite the weld beads (7) on the other joining surface (6A).

6. Process according to one of claims 1 to 5, characterised in that the two half gears are aligned prior to or during feeding to a welding machine.

7. Process according to one of claims 1 to 6, characterised in that the two half gears (2A, 2B) are aligned by electrically non-conducting positioning elements.

8. Process according to one of claims 1 to 7, characterised in that marking is applied to the circumference (11) of the single gear piece (8) during the production thereof, said marking extending along a surface line.

9. Process according to one of claims 1 to 8, characterised in that the valve spheres are inserted by sucker arms identical in number to the valve spheres, the sucker arms being positioned relative to one another in such a manner that the spheres drop into the half cavities (4A, 4B) situated therebelow once the vacuum is removed.

10. Process according to one of claims 1 to 9, characterised in that the welded gear (1) is subjected to vibration, and the resulting frequency spectrum is electronically recorded and compared with a frequency spectrum corresponding to that of a perfect gear from the point of view of the number and mobility of the valve spheres, inadmissible deviation between the two frequency spectra activating a control unit which rejects the gear subjected to vibration.

11. Process according to claim 10, characterised in that the inlet or outlet openings of the welded gear (1) are traversed by a fluid, and the resulting pressure difference between the inlet and outlet openings is measured and recorded and compared with the pressure difference corresponding to a perfect gear from the point of view of the number and mobility of the valve spheres.

12. Process according to claim 11, characterised in that inadmissible deviation between the two pressure differences activates a flow which rejects the gear subjected to the pressure difference measurement.

## Revendications

1. Procédé de réalisation d'une roue dentée d'une pompe à engrenage intérieur, constituée de deux moitiés de roue (2A, 2B), qui sont respectivement pourvues de semi-cavités (4A, 4B) constituant des canaux d'évacuation (3), dans lesquelles sont disposées des billes, ces moitiés de roues (2A, 2 B) étant assemblées de telle manière que les canaux d'évacuation (3) complets sont formés par les semi-cavités (4A, 4B) et que les dents (5) de la roue dentée (1) se superposent, les billes de soupape étant introduites dans les semi-cavités (4A ou 4B) d'une moitié de roue (2A ou 2B) avant un processus de soudage,
**caractérisé en ce que** les moitiés de roues (2A, 2B) sont soumises à un processus de soudage par décharge de condensateur, et en ce que, simultanément à la mise en forme des dents (5) et des canaux d'évacuation (3) constitués des semi-cavités (4A, 4B) disposés sur les surfaces (6A, 6B) constituant la face frontale des moitiés de roues (2A, 2B), on réalise des nervures de soudage (7), qui sont solidaires des moitiés de roues (2A, 2B) et qui s'étendent au-dessus des surfaces (6A, 6B).

2. Procédé selon la revendication 1,
**caractérisé en ce que** les moitiés de roues (2A, 2B) sont réalisées par un procédé de frittage.

3. Procédé selon la revendication 1 ou 2,
**caractérisé en ce que** les deux moitiés de roues (2A, 2B) sont réalisées sous la forme d'une roue unique (8) au cours d'une première phase de procédé (Fig. 1), en ce que les deux faces frontales de cette roue sont identiques aux deux surfaces (6A, 6B), en ce que la roue unique (8) est divisée en deux moitiés de roues (2A, 2B) par coupe selon un plan médian perpendiculaire à son axe de rotation (9) (Fig. 2), et en ce que les deux moitiés de roues (2A, 2B) sont retournées selon un angle de 180° autour d'un axe perpendiculaire à l'axe de rotation (9) avant le processus de soudage.

4. Procédé selon l'une de revendications 1 à 3,
**caractérisé en ce que** la roue dentée se compose de deux moitiés de roues (2A, 2B) réalisées séparément.

5. Procédé selon l'une de revendications 1 à 4,
**caractérisé en ce que**, simultanément à la mise en forme des dents (5), on réalise sur l'une des surfaces (6B) une nervure de soudage (7) qui est disposée en regard d'un évidement ménagé sur l'autre desdites surfaces (6A).

6. Procédé selon l'une de revendications 1 à 5,
**caractérisé en ce que** le positionnement ajusté des deux moitiés de roues s'effectue avant ou pendant l'amenée vers une machine de soudage.

7. Procédé selon l'une de revendications 1 à 6,
**caractérisé en ce que** le positionnement ajusté des deux moitiés de roues (2A, 2B) s'effectue au moyen d'éléments de positionnement électriquement non conducteurs.

8. Procédé selon l'une de revendications 1 à 7,
**caractérisé en ce que** la réalisation de la roue unique (8) comporte un marquage à sa périphérie (11), qui se situe le long d'une ligne périphérique.

9. Procédé selon l'une de revendications 1 à 8,
**caractérisé en ce que** l'insertion des biles de soupapes s'effectue à travers une série de tubes d'aspiration dont le nombre est égal à celui des billes, les tubes étant positionnés de telle manière qu'après l'arrêt de l'aspiration, les billes tombent dans les semi-cavités sous-jacentes (4A, 4B).

10. Procédé selon l'une de revendications 1 à 9,
**caractérisé en ce que** la roue dentée (1) soudée est soumise à un processus vibratoire, le spectre des fréquences générées étant enregistré électroniquement et comparé à un spectre de fréquences correspondant à une roue dentée parfaite en fonction du nombre et de la mobilité des billes de soupape, dans lequel, lorsque la différence entre les deux spectres de fréquence est inacceptable, la roue dentée soumise au processus vibratoire est rejetée comme déchet.

11. Procédé selon la revendication 10,
**caractérisé en ce que** les ouvertures d'amenée ou d'évacuation de la roue dentée soudée (1) sont soumises à la circulation d'un fluide, en ce que la différence de pression entre les ouvertures d'amenée et les ouvertures d'évacuation est mesurée et comparée, selon le nombre et la mobilité de billes de soupape, à celle mesurée dans une roue dentée de référence.

12. Procédé selon la revendication 11,
**caractérisé en ce que**, lorsque la différence de pression est inacceptable, le flux est interrompu et la roue dentée correspondante est rejetée comme déchets.
